(19) Europäisches Patentamt / European Patent Office / Office européen des brevets

(11) **EP 4 183 250 A1**

(12) **EUROPEAN PATENT APPLICATION**

(43) Date of publication:
**24.05.2023 Bulletin 2023/21**

(51) International Patent Classification (IPC):
***A01K 11/00*** *(2006.01)*

(21) Application number: **21209118.5**

(22) Date of filing: **18.11.2021**

(52) Cooperative Patent Classification (CPC):
**A01K 11/004**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Max-Planck-Gesellschaft zur Förderung der Wissenschaften e.V.**
**80539 München (DE)**
• **South African National Parks**
**0001 Pretoria (ZA)**
• **Gepe Geimuplast GmbH**
**82490 Farchant (DE)**

(72) Inventors:
• **Heine, Georg**
**88239 Wangen im Allgäu (DE)**

• **Vorneweg, Bernd**
**78315 Radolfzell (DE)**
• **Wikelski, Martin Christoph**
**78467 Konstanz (DE)**
• **Müller, Ursula Rosa**
**78467 Konstanz (DE)**
• **Koblitz, Jens**
**78467 Konstanz (DE)**
• **Van Schalkwyk, Ockert Louis**
**1350 Skukuza (ZA)**
• **Viljoen, Pauli**
**Pretoria 0001 (ZA)**
• **Schöpf, Johann**
**82490 Farchant (DE)**
• **Hutsteiner, Josef**
**82490 Farchant (DE)**

(74) Representative: **Vossius & Partner**
**Patentanwälte Rechtsanwälte mbB**
**Siebertstraße 3**
**81675 München (DE)**

(54) **ELECTRONIC TAG**

(57) The present disclosure relates to an electronic tag for behavioural monitoring of animals, the electronic tag comprising a microprocessor and at least one sensor. The electronic tag is configured to obtain, via the at least one sensor, movement data of an animal to which the electronic tag is attached and to determine, based on the obtained movement data, a behaviour of the animal. The disclosure further encompasses a corresponding method as well as an ear tag.

**Fig. 1**

EP 4 183 250 A1

## Description

The present invention relates to an electronic tag. More particularly, the present invention relates to an electronic wearable tag for remotely monitoring a behavioural state of animals such as wildlife and livestock.

The health monitoring of wildlife and livestock is of increasing need in today's societies around the world. Currently available ear tags for domestic livestock and wildlife are generally large flaps with numbers or electronic units that are heavy (> 60gr) and hang down from the ear tag punch hole. This enables the animal to spin tag and ear flap around, thus damaging the positioning in the ear. Electronic observation units on mammals are situated around necklaces or collars and most units are battery-powered only. Only very few electronic units record behavioural or physiological parameters.

There is thus a need for an electronic tag that resolves the above-mentioned issues. In particular, the present invention may provide a centrally sitting (i.e. non-swinging), very small, solar-powered electronic ear tag that records position and sensor information from IMU sensors (e.g. 3-D acceleration, 3-D magnetometry), interprets the behaviour and health on board and transmits this information through either terrestrial or Ground-to-Satellite IoT networks in near real time. The advantage of this system over others is that it allows for customised, individualised observations of free-roaming animals around the globe in near real time.

The invention is defined the independent claims. Depending claims describe preferred embodiments.

The present disclosure relates to an electronic tag for behavioural monitoring of animals, the electronic tag comprising a microprocessor and at least one sensor. The electronic tag is configured to obtain, via the at least one sensor, movement data of an animal to which the electronic tag is attached and to determine, based on the obtained movement data, a behaviour of the animal.

Various embodiments may preferably implement the following features.

The microprocessor may be configured to determine the behaviour according to at least one behavioural threshold, wherein preferably the at least one behavioural threshold is individually set for each animal.

The behaviour may comprise at least one of a calm or normal state, an agitated or stressed state and immobility.

Preferably, the electronic tag further comprises a transmitter or transceiver configured to transmit the behaviour of the animal, wherein preferably the transmitter or transceiver is configured to perform at least one of internet of things, IoT, communication, GSM, satellite communication, LoRa, SigFox or 5G.

Preferably, the at least one sensor is at least one of a GPS sensor, an acceleration sensor, a gyroscope, an inertial measurement unit, IMU, a temperature sensor, a humidity sensor, an air quality sensor, an audio sensor, a pressure sensor or a physiological sensor.

Preferably, the electronic tag further comprises at least one photosensitive element configured to provide energy to an energy storage comprised in the electronic tag.

Preferably, the electronic tag is removably attached to a collar or a harness, or the electronic tag is removably attached to an ear tag. Preferably, the electronic tag is positioned centrally with respect to a pin of the ear tag.

The present disclosure further relates to a method for behavioural monitoring of animals, the method being carried out in an electronic tag. The method comprises obtaining, by at least one sensor of the electronic tag, movement data of an animal, processing, by a microprocessor of the electronic tag, the movement data and determining, by the microprocessor, a behaviour of the animal from the movement data.

Various embodiments may preferably implement the following features.

The microprocessor may be configured to determine the behaviour according to at least one behavioural threshold, wherein preferably the at least one behavioural threshold is individually set for each animal.

Preferably, the behaviour comprises at least one of a calm or normal state, an agitated or stressed state and immobility.

Preferably, the movement data comprises at least one of GPS data, acceleration data, gyroscope data or inertial measurement unit, IMU, data, and/or the method further comprises obtaining at least one of temperature data, humidity data audio data, pressure data, air quality data or physiological data of the animal.

Preferably, the method further comprises transmitting the determined behaviour to a receiving station.

The present disclosure also relates to an ear tag for attachment to an animal's ear and for receiving an electronic tag, preferably as described above, comprising a pin connected to the ear tag for piercing an animal's ear and a reception space for receiving the electronic tag. The electronic tag, when attached to the ear tag, is positioned centrally with respect to the pin.

Preferably, the reception space is a slide-in drawer-type reception space configured to detachably receive the electronic tag.

The invention will be further described with reference to the figures.

Fig. 1 shows a basic configuration according to an example of the present disclosure,
Fig. 2 shows a configuration according to an example of the present disclosure,

Fig. 3 shows an exemplary flow chart according to the present disclosure,
Figs. 4 to 6 show exemplary acceleration measurements for various applications,
Fig. 7 shows a top view of an ear tag according to an example of the present disclosure,
Figs. 8a and 8b show side views of an ear tag according to an example of the present disclosure, and
Figs. 9a and 9b show an exemplary ear tag receiving an electronic tag.

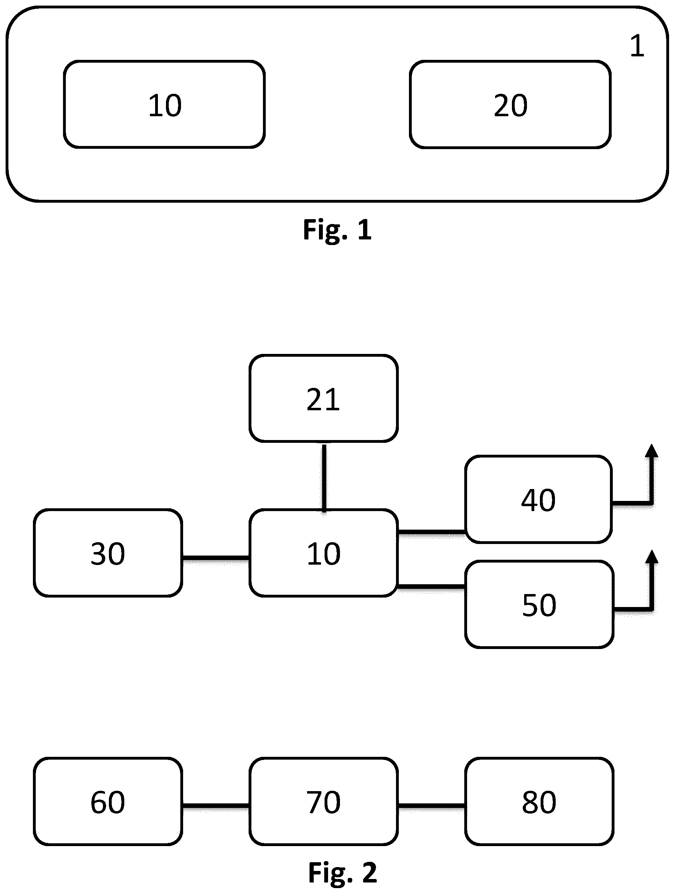

Fig. 1 shows a basic configuration of an electronic tag 1 according to the present disclosure, comprising a microprocessor 10 and at least one sensor 20. The electronic tag 1 is configured to be attached to an animal and to monitor the behaviour of animals such as wildlife or livestock by obtaining, via the at least one sensor 20, movement data of the animal. Based on said movement data, a behaviour of the animal is determined. The behaviour may thereby relate to at least one state of the animal such as a normal state, an agitated or stressed state or immobility, i.e. death. The functionality of the electronic tag 1 will be further described below.

Fig. 2 depicts a further configuration of the electronic tag 1. The electronic tag 1 comprises a microprocessor 10 or central processor unit which is connected to a memory 30 and a sensor 20, in this example a 3-axis acceleration sensor 21. Furthermore, a GPS receiver 40 as well as a communication module 50 as described below are connected to the microprocessor 10. The communication module 50 may be provided as a transmitter or transceiver. The electronic tag also comprises an energy storage 80 such as a lithium polymer accumulator, an energy source 60 such as a photosensitive element and a power management 70 or energy harvester for managing and distributing the energy. The energy storage 80 is at least connected to the microprocessor 10 and may also be connected to the communication module 50 and/or the memory and/or the GPS receiver and/or the sensor(s) 20, 21 (not explicitly shown in the figure).

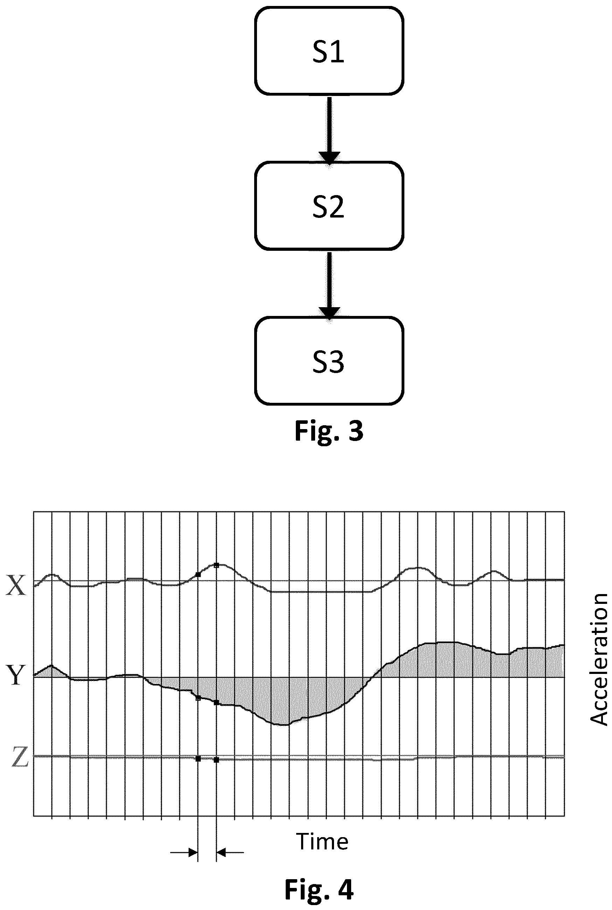

The present disclosure also relates to a corresponding method. An exemplary flow chart is shown in Fig. 3. The method comprises step S1 of obtaining, by at least one sensor 20 of the electronic tag 1, movement data of an animal, step S2 of processing, by a microprocessor 10 of the electronic tag 1, the movement data, and step S3 of determining, by the microprocessor 10, a behaviour of the animal from the movement data.

Determination of the behaviour may be performed according to at least one behavioural threshold. Preferably the at least one behavioural threshold is individually set for each animal. As indicated above, the behaviour comprises at least one of a calm or normal state, an agitated or stressed state and immobility. As explained above, the movement data may comprise at least one of GPS data, acceleration data, gyroscope data or inertial measurement unit, IMU, data. The method may further comprise obtaining at least one of temperature data, humidity data, audio data, air pressure data, air quality data or physiological data of the animal. The method may also comprise transmitting the gathered data and/or the behavioural data to a receiving station such as a smartphone, a base station, a computer, a server, a satellite or similar.

An electronic tag 1 as disclosed herein may also be referred to as a data logger. It can be particularly used for behavioural monitoring of animals such as wildlife or livestock and comprises a microprocessor 10 and at least one sensor 20. The sensor may be an acceleration sensor 21, e.g. a three-axis acceleration sensor, configured to acquire acceleration data of the electronic tag 1. The data acquired by the acceleration sensor 21 can be used to determine movement data of an animal to which the electronic tag is attached. Furthermore, a GPS sensor or GPS receiver 40 may be provided to provide localisation data in addition to the acceleration sensor 21 or taken alone. Thereby, the position of the animal may also be acquired.

The microprocessor 10 is configured to determine a behaviour of the animal to which the electronic tag 1 is attached based on the data acquired by the sensor 20, 21. In particular, their behaviour may relate to at least one of a normal state, agitated state or stressed state and immobility, i.e. death of the animal. Determination of the respective state performed by setting at least one behavioural threshold. Advantageously, the behavioural threshold is set individually for the respective animal. The sensor 20 may also be at least one of a temperature sensor, a humidity sensor, a gyroscope, an inertial measurement unit (IMU), an audio recorder, air pressure sensor, air quality sensor or physiological sensor to determine physiological data of the animal such as blood flow to determine heart rate, breathing rate, etc. The electronic tag 1 may further comprise a memory 30, e.g. a flash memory, connected to the microprocessor 10.

The electronic tag 1 therefore is able to compute or determine a behavioural state of the animal without the need for external means of processing. Consequently, the need to store and/or transmit raw data on the electronic tag is rendered moot.

Data from the electronic tag 1 may be collected using a wired or wireless connection. Therefore, a communication module 50 may be provided. The communication module 50 may be configured to perform data transmission and/or reception via at least one of Bluetooth, SIGFOX, LoRa WAN, 5G, GSM or lot (Internet of things) communication, in particular narrowband IoT (NB-IoT). Furthermore, ground to space, i.e. satellite communication, communication, such as such as ICARUS communication, may also be used. In other words, the communication module 50 may be provided as a transmitter or transceiver. Thus, the data (raw data and/or behavioural data) may be transmitted to a receiving station such as a smartphone, a base station, a computer, a server, a satellite or similar.

The communication module 50 may be used for online monitoring (data upload) and for controlling the test settings (data download) as well as parameter setting.

The electronic tag 1 may further comprise an energy storage 80 such as a battery or an accumulator. The energy storage may be provided in the form of a lithium polymer cell. In addition, an energy source 60 such as a photosensitive element (e.g. a solar cell), may be provided to provide energy to the energy storage 80. The energy storage 80 is configured to power the microprocessor 10 as well as the at least one sensor 20, 21, the GPS sensor 40 and the communication module 50. In order to manage and distribute energy, an energy harvester or power management 70 may be provided and connected to the energy storage 80 and/or the energy source 60.

In the following, an example of the operation of the acceleration sensor and the data processing of the electronic tag is given. The parameters and numbers are not to be seen as restricting the scope of the present disclosure.

The acceleration sensor 21 is put into operation cyclically and supplies a measured value for the X, Y and Z axes for each measurement. The measuring frequency (standard 16 Hz) and measuring duration are adjustable. The recorded values of a measuring cycle are evaluated according to various criteria in the central processor unit, i.e. the microprocessor 10.

Since a data logger such as the electronic tag 1 and thus the acceleration sensor 21 cannot be attached to an animal with a fixed orientation, the differences to the mean values of the 3 axes are used to obtain information about the condition and behaviour of the animals. Trigger thresholds can thus be used to obtain information on the behaviour and condition of an animal. Different animal species require different trigger thresholds which require different individual settings even within one species. The settings can be made individually via a download of defined commands.

A data message of, according to the present example, 12 bytes contains the geographical coordinates, timestamp, battery voltage and the memory index under which the data record is stored in the memory 30 of the electronic tag 1. There may also be status and alarm messages. With the help of the memory index, it is possible to subsequently read out data that was not transmitted, e.g. due to a missing radio connection.

In Fig. 4, exemplary acceleration measurements of the X, Y and Z axes over time are shown. The horizontal lines indicate the mean values of the acceleration in the X, Y and Z direction, respectively. The vertical lines indicate the measurement intervals, in the present example 1 second. The acceleration measurements were performed with a BMA 280 sensor by Bosch. The sensor generates acceleration measurement values of 3 axes (X,Y,Z) with a resolution of 14 bit each (16384 lsb). The sensor is initialised to the highest sensitivity of +- 2g by default.

The measurements are carried out cyclically in the ACC measuring cycle. This clock is variable, is preset to 10 sec and can be changed by cable, i.e. through a wired connection, as well as by a download command, e.g. via a wireless connection. Basic clock is 1 sec. The measured values are written separately as X,Y,Z into a buffer which also has a variable length. The maximum buffer length is 256, preset is 128 measurement values for each Y,X and Z. When the buffer is full (memory pointer = NSP), the program starts again at memory location 1 and overwrites the old measured values. It is advantageous to use a binary number (e.g. 256, 128, 64, 32) for the memory length because the computational effort in the processor is then smaller - instead of a division a simple shift-right instruction can be used.

The memory length together with the measuring clock determine the temporal behaviour of the algorithm. With the standard settings (10 sec measuring cycle, n=128 measurements) an inertia of 1280 sec = 21.3 minutes results. It therefore takes at least 1 x inertia or a maximum of 2 x inertia for the algorithm to respond.

The calculation process to determine whether an animal is immobile or dead, i.e. the behavioural status, can in principle be executed at anytime. By default, the calculation process is executed in the cycle of the inertia (preset every 21.3 minutes).

Calculation of the mean values $X_{mean}$ of the X axis is shown below, wherein NSP denotes the memory length and n denotes the memory position and $X\_acc_n$ the acceleration value at memory position n.

$$X_{mean} = \frac{\sum_{n=1}^{NSP} X\_acc_n}{NSP}$$

The same computation can be performed for the Y and Z axes.

With the next calculation step, the sum of the deviations from the mean value is formed separately for each axis. The amounts of the deviations are summed up and a mean deviation is calculated by dividing by NSP.

$$X_{death} = \frac{\sum_{n=1}^{NSP} |X\_acc_n - X_{mean}|}{NSP}$$

The final acceleration value is yielded by addition of the values of each axis, i.e.

$$ACC_{death} = X_{death} + Y_{death} + Z_{death}.$$

The value "ACC_death" determined in this way is finally compared with a threshold value (death_level). If the calculated value ACC_death is smaller than the threshold value death_level, the animal is dead. Death_level can be set via a download command which allows an individual adjustment.

The electronic tags or loggers will first lie still for some time in a test mode and would then constantly send an alarm message. To prevent this, it is necessary to set up an on/off option. By default, the ACC sensor is set to OFF and only switched on e.g. via download command when the electronic tag or logger is at the animal.

Furthermore, the electronic tag 1 may comprise an action algorithm, i.e. a determination of the behavioural state of the animal to which the electronic tag 1 is attached. The determination and computation, respectively can advantageously be performed by the microprocessor and thus directly on the electronic tag 1.

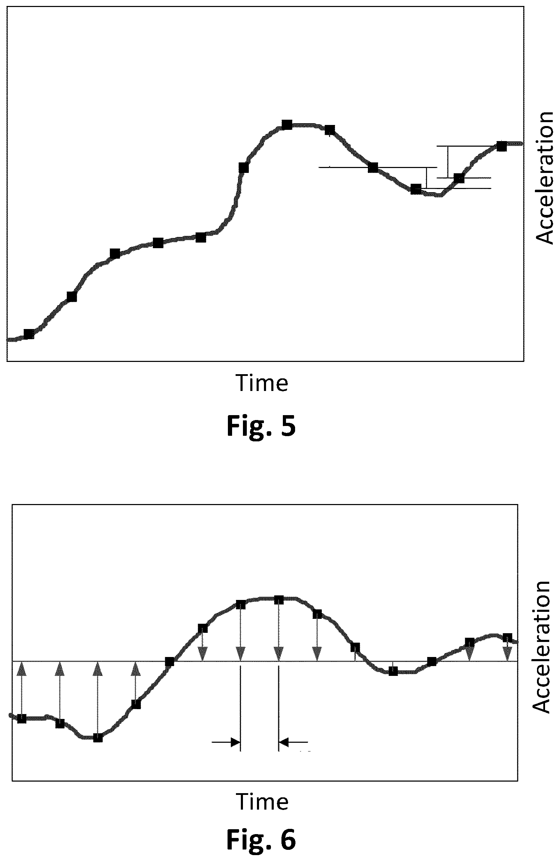

The Action Algorithm is used to determine when an animal is excessively active. For example, it is expected that particularly large or rapid acceleration changes occur when animals are on the run. An exemplary measurement of the activity, i.e. the acceleration data, over time is shown in Fig. 5. Again, the x axis indicates the time while the y axis indicates the acceleration values. Each measurement value is shown by a small square. The horizontal and vertical lines indicate the differential values, i.e. the differences between the measurement values.

The determination of the behavioural state may be based on the same measurements that are recorded in the death algorithm presented above. Thus, there is a memory area which contains the ACC-measurements for the three axes $X\_acc_n$, $Y\_acc_n$ and $Z\_acc_n$. Starting from the current measured value $act\_N$, the amount of difference is added to the previous measured value. The number how many measured values come into the calculation is determined by the variable $N\_action$. The calculation is carried out in each case separately for all three axes.

$$X_{action} = \frac{\sum_{n=act\_N}^{act_N - N\_action} |X\_acc_n - X\_acc_{n-1}|}{N\_action}$$

The index for the memory access thus runs backwards.

For the evaluation whether an unusual activity is present, there is a threshold value *Action_Level* which triggers an alarm message if the threshold is exceeded. The value of *Action_Level* is adjustable via a download command and can thus be adapted individually.

The electronic tag 1 and the respective measurements and processing can also be used for earthquake detection. Therefore, the behaviour of animals, e.g. cows, is monitored and evaluated.

The algorithm in which restlessness or agitation is measured on cattle is based on a cyclic measurement period of e.g. 20 sec. The measurement is performed with a sampling frequency of 16 Hz. This cyclic measurement is repeated every 3 minutes. For cattle, the measurement cycle of 3 minutes was chosen because of the battery capacity and the runtime of about 6 months. For tags on ear tags, the measurement period could be set to a few seconds and the cycle time to a value greater than a few minutes.

Cyclically, e.g. every 5 minutes a measuring period of e.g. 5 sec is started during which data (X,Y,Z) is stored with a sampling frequency of e.g. 16 Hz. With this measuring method, the actual movement is measured due to the high measuring frequency. In the end it is the change of the acceleration due to gravity on the 3 axes. The calculation of the unsteadiness is done via the difference amounts to the mean value.

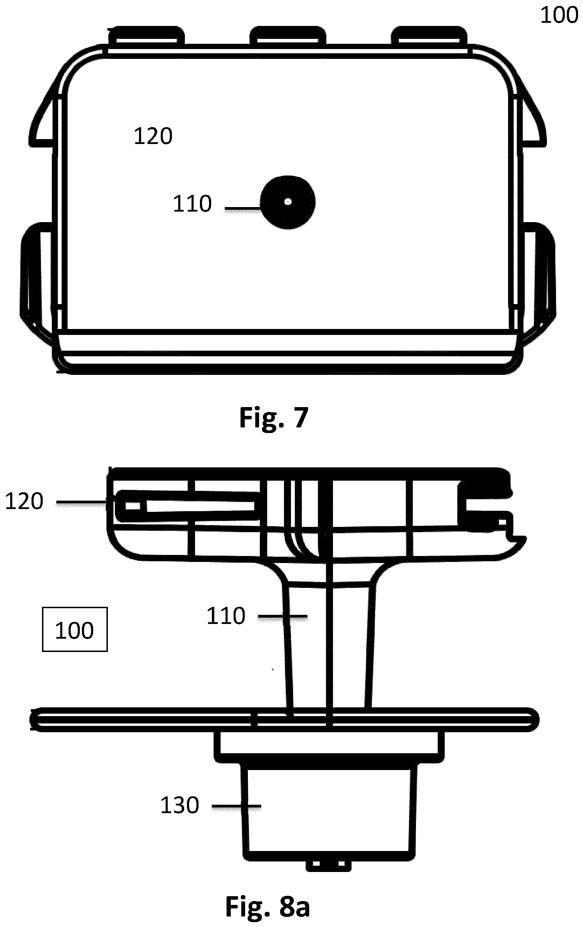

An exemplary measurement is shown in Fig. 6, in which the deviation from the mean value (the straight line in the middle) over time is depicted. The mean value is indicated by the horizontal line, each measurement point is indicated by a small square. The vertical lines show the deviation from the mean value and are spaced from each other by the sample interval. The present invention further relates to an ear tag 100 for attachment to an animal's ear. The ear tag 100 may also receive an electronic tag 1 as described above. Fig. 7 shows a top view of an exemplary ear tag 100. The ear tag 100 may comprise a reception space 120 for receiving the electronic tag 1. The reception space 120 can e.g. be a slide-in drawer type reception space. In this manner, the electronic tag 1 may easily be attached and detached to the animal's ear while always ensuring correct positioning during use. In figures 7 to 9, a substantially rectangular drawer-type reception space 120 is shown which comprises two shorter and two longer sides, wherein one of the longer sides is open for receiving the electronic tag 1. The reception space 120 may comprise means for securing the electronic tag 1 in place such as a snap-in connection, click connection, friction connection or similar. Other shapes and reception types may be feasible.

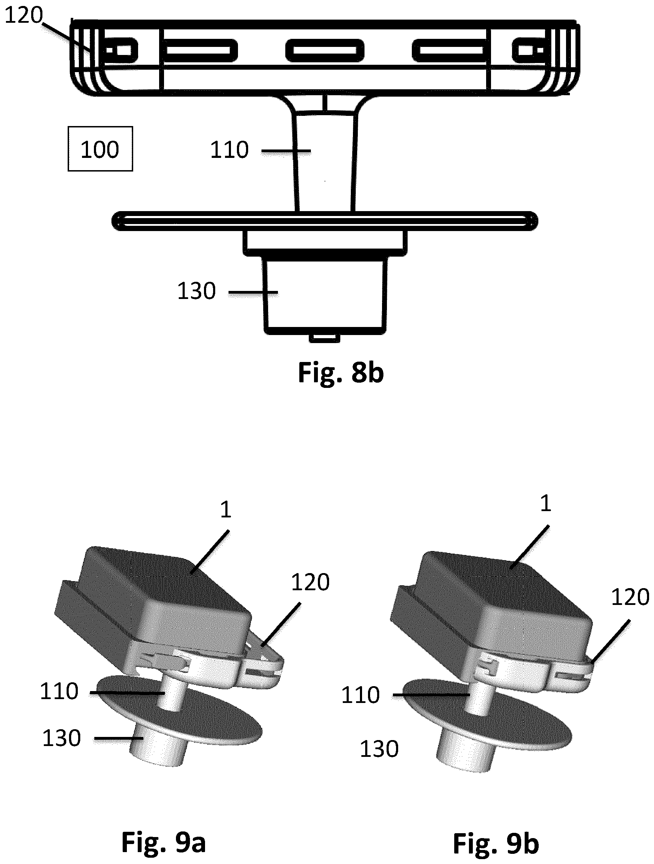

Figs. 8a shows a side view of a shorter side of an ear tag 100 according to an example and Fig. 8b shows a side view of a longer side of an ear tag 100 according to the example. The views of Figs. 8a and 8b are thus tilted 90° with respect to each other. As shown in the figures, the ear tag 100 comprises a pin 110 connected to the ear tag 100 for piercing an animal's ear. The pin 110 may be integrally formed with the reception space 120 or may be attached via a glued connection, a screw connection or other attachment means. Moreover, a holding piece 130 which is in engagement with the pin 110 is provided in order to secure the ear tag 100 when the pin 110 is pierced through an animal's ear. The holding piece 130 thus acts as a counter piece to the reception space 120. The shape of the holding piece 130 as shown in the figures is not to be seen as restrictive and other shapes or means of attachment may be feasible. Moreover, an ear tag 100 without a holding piece 130 may also be employed according to the disclosure, e.g. by providing a self-securing pin 110.

The electronic tag 1, when attached to the ear tag 100, is positioned centrally with respect to the pin 110 as also evident from the figures. Thereby, no free-swinging or pendulum effect occurs which might distort the acceleration measurements.

Figs. 9a and 9b show the process of inserting an electronic tag 1 according to an example as described above into an ear tag 100 according to an example as described above.

In summary, the advantages of the electronic tag and in particular the electronic tag in combination with the ear tag are as follows.

The ear tag's pin sits centrally, so no free-swinging/pendulum effect of the ear tag is possible. This is achieved by the use of a slide-in drawer-type reception system implemented in the ear tag. This drawer receives the electronic tag base and provides a strong and tight link between the ear tag and the electronic tag. The electronic tag is solar powered and very small, below 30gr or below 20gr in different combinations, and features a solar panel that allows for the constant recharge and very long life of the electronic tag. The electronic tag records GPS location, but also IMU sensor information plus other sensors for temperature, humidity, etc. Uniquely, the electronic tag then uses internal calculation power to analyse the sensor data collected from the animal to create intelligent output parameters in a much lower dimension, e.g. 3-D acceleration data are reduced to stress levels of the animal or to energy expenditures. These data are then also related to health and well-being of the animal or, alternatively, immediately indicate the distress of an animal. Death is recorded primarily by 3-D acceleration that is measured as flat line below sensor noise for a specific period of time, e.g. 10 minutes.

The electronic tag can also be used independently of the ear tag on collars or harnesses in species where ear tagging is not desirable. Very importantly, the sensor information and the internal calculation are not done on a population level, i.e. the same algorithms are used for all individuals, but instead the sensor information of each individual is adjusted to its behaviour. For example, the same amount of 3-D acceleration in one individual of one species may not yet indicate stress and discomfort, but in another individual with much lower threshold it may already indicate strongly stressful conditions. The on-board interpreted information of the sensor data is subsequently being used either as threshold information or through artificially intelligent algorithms to trigger an immediate message through the communication networks. For example, if the death indicator determines the demise of the animal, or if the stress indicator determines highly stressful conditions, messages are sent immediately to the animal managers via communication networks.

The electronic tag uses a combination or single sources of communication channels, particularly the IoT (Internet of Things) networks, such as NB-IoT (Narrowband IoT), SigFox, LoRaWAN or Ground-to-Satellite IoT, such as ICARUS communication schemes.

Typical use cases of these ear tagging systems are the study of the ontogeny of animals, i.e. the tagging of young mammals and continued observation throughout the lifetime of an animal. Each ear can receive an ear tag and therefore the transmissions from different ears can occur at different times, in effect doubling the transmission numbers based on solar power plus having failure redundancy.

The tags function like wearables for wildlife, i.e. they determine the behaviour and health status of individuals wherever they roam. The combination of GPS and IMU also enables high-definition dead reckoning to decrease the energy expenditure necessary for GPS. Moreover, the combination of different IoT protocols enables communication from anywhere in the world, but also rapid near real-time communication with managing entities. The monitored animals can either be livestock, wildlife game, farm animals or true wildlife. The small size and weight of the tags enables tagging of all mammals above 1kg.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

| | |
|---|---|
| 1 | Electronic tag |
| 10 | Microprocessor |
| 20 | Sensor |
| 21 | Acceleration sensor |
| 30 | Memory |
| 40 | GPS receiver |
| 50 | Communication module |
| 60 | Energy source, photosensitive element, solar cell |
| 70 | Energy harvester, power management |
| 80 | Energy storage |
| 100 | Ear tag |
| 110 | Pin |
| 120 | Reception space |
| 130 | Holding piece |

**Claims**

1. Electronic tag (1) for behavioural monitoring of animals, the electronic tag (1) comprising:

   a microprocessor (10), and at least one sensor (20, 21),
   wherein the electronic tag (1) is configured to obtain, via the at least one sensor (20, 21), movement data of an animal to which the electronic tag (1) is attached;
   wherein the microprocessor (10) is configured to determine, based on the obtained movement data, a behaviour of the animal.

2. Electronic tag (1) according to claim 1, wherein the microprocessor (10) is configured to determine the behaviour according to at least one behavioural threshold,
   wherein preferably the at least one behavioural threshold is individually set for each animal.

3. Electronic tag (1) according to claim 1 or 2, wherein the behaviour comprises at least one of a calm or normal state, an agitated or stressed state and immobility.

4. Electronic tag (1) according to any one of the preceding claims, further comprising a transmitter or transceiver (50) configured to transmit the behaviour of the animal,
   wherein preferably the transmitter or transceiver (50) is configured to perform at least one of internet of things, IoT, communication, GSM, satellite communication, LoRa, SigFox or 5G.

5. Electronic tag (1) according to any one of the preceding claims, wherein the at least one sensor (20) is at least one of a GPS sensor (40), an acceleration sensor (21), a gyroscope, an inertial measurement unit, IMU, a temperature sensor, a humidity sensor, an air quality sensor, an audio sensor, a pressure sensor or a physiological sensor.

6. Electronic tag (1) according to any one of the preceding claims, further comprising at least one photosensitive element (60) configured to provide energy to an energy storage (80) comprised in the electronic tag (1).

7. Electronic tag (1) according to any one of the preceding claims, wherein the electronic tag (1) is removably attached to a collar or a harness, or
   wherein the electronic tag (1) is removably attached to an ear tag, and wherein the electronic tag (1) is positioned centrally with respect to a pin of the ear tag.

8. Method for behavioural monitoring of animals, the method being carried out in an electronic tag (1) comprising:

   obtaining, by at least one sensor (20, 21) of the electronic tag (1), movement data of an animal,
   processing, by a microprocessor (10) of the electronic tag (1), the movement data, determining, by the microprocessor (10), a behaviour of the animal from the movement data.

9. Method according to claim 8, wherein the microprocessor (10) is configured to determine the behaviour is performed according to at least one behavioural threshold, wherein preferably the at least one behavioural threshold is individually set for each animal.

10. Method according to claim 8 or 9, wherein the behaviour comprises at least one of a calm or normal state, an agitated or stressed state and immobility.

11. Method according to any one of claims 8 to 10, wherein the movement data comprises at least one of GPS data, acceleration data, gyroscope data or inertial measurement unit, IMU, data, and/or
wherein the method further comprises obtaining at least one of temperature data, humidity data, audio data, pressure data, air quality data or physiological data of the animal.

12. Method according to any one of claims 8 to 11, further comprising transmitting the determined behaviour to a receiving station.

13. An ear tag for attachment to an animal's ear and for receiving an electronic tag (1), preferably according to one of claims 1 to 6, comprising:

    a pin (110) connected to the ear tag for piercing an animal's ear;
    a reception space (120) for receiving the electronic tag (1),
    wherein the electronic tag (1), when attached to the ear tag, is positioned centrally with respect to the pin (110).

14. Ear tag according to claim 13, wherein the reception space (120) is a slide-in drawer-type reception space configured to detachably receive the electronic tag (1).

**Fig. 1**

**Fig. 2**

**Fig. 3**

**Fig. 4**

**Fig. 5**

**Fig. 6**

EP 4 183 250 A1

100

120

110

**Fig. 7**

120

100

110

130

**Fig. 8a**

12

120

100

110

130

**Fig. 8b**

1

120

110

130

**Fig. 9a**

1

120

110

130

**Fig. 9b**

Europäisches
Patentamt

European
Patent Office

Office européen
des brevets

**EUROPEAN SEARCH REPORT**

**Application Number**

**EP 21 20 9118**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 970 616 A (COYOTE ZHINONG TECH BEIJING CO LTD) 18 June 2021 (2021-06-18) * [0019, 0034-0117, 0104-0105]; claims 1-2, 14; figures 1-7 * | 1-3,5, 8-14 | INV. A01K11/00 |
| X | CA 2 494 670 A1 (BOOKER CALVIN W [CA]; KOTELKO MICHAEL J [CA] ET AL.) 24 September 1999 (1999-09-24) * page 18; claims 1, 12 * | 1,4,5,8, 11 | |
| X | US 10 045 511 B1 (YARDEN MOSHE [IL] ET AL) 14 August 2018 (2018-08-14) * column 12, line 43 - column 13, line 48; claims 1, 9, 12, 14; figure 3 * * column 13, line 4 - line 11 * * column 19, line 55 - line 65 * * column 16, line 1 - line 10 * | 1-5,8,9, 11,12 | |
| X | US 2021/307291 A1 (SINGH VISHAL [US] ET AL) 7 October 2021 (2021-10-07) * [0071, 0073-0078, 0084, 0089-0096, 0112]; figures 1c, 1d * | 1-5,8-12 | |
| X | EP 3 320 772 A1 (N V NEDERLANDSCHE APPARATENFABRIEK NEDAP [NL]) 16 May 2018 (2018-05-16) * [0032-0033, 0037-0047, 0050, 0053-0056, 0069]; claims 1, 34, 10; figure 2 * | 1,2,4,8, 9,12 | |
| X | CN 108 617 533 B (QINGDAO ZHANGYUGE INFORMATION TECH CO LTD) 12 March 2021 (2021-03-12) * [0054-0058, 0076, 0078-0079, 0082, 0099]; claims 1, 3, 6, 12; figure 5 * | 1,4-6,8, 11,12 | |

TECHNICAL FIELDS
SEARCHED      (IPC)

A01K

-/--

The present search report has been drawn up for all claims

| Place of search | Date of completion of the search | Examiner |
|---|---|---|
| The Hague | 6 July 2022 | Steinbock, Lorenz |

**page 1 of 2**

**Europäisches Patentamt**
**European Patent Office**
**Office européen des brevets**

# EUROPEAN SEARCH REPORT

Application Number

EP 21 20 9118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/208778 A1 (MENKES AVI [IL] ET AL) 27 July 2017 (2017-07-27) * [0037, 0054, 0087, 0093-0099, 0109]; claims 1, 8-9, 12; figures 1-4, 11 * ----- | 1-5,7-12 | |
| X | CN 111 264 412 A (SHANGHAI MINGLUE AI GROUP CO LTD) 12 June 2020 (2020-06-12) * [0054, 0055]; claims 1,3, 5-6, 8, 12; figure 4 * ----- | 1-5,8-12 | |
| X | WO 2017/210740 A1 (COMMW SCIENT IND RES ORG [AU] ET AL.) 14 December 2017 (2017-12-14) * [0040, 0065]; claim 1; figures 1-5b * ----- | 1,6,8,12 | |
| X | WO 2019/132803 A2 (AKDOGAN CEVDET [TR]) 4 July 2019 (2019-07-04) * page 6, line 25 - line 29; claim 1; figures 1-9 * ----- | 1,7,8,10 | |
| X | WO 2016/183616 A1 (STOCK BRANDS CO PTY LTD [AU]) 24 November 2016 (2016-11-24) * [0029, 0032-0033, 0037]; claims 1, 6-7; figures 1-9 * ----- | 13,14 | TECHNICAL FIELDS SEARCHED (IPC) |
| X | KR 101 204 277 B1 (KIM IL-GON) 27 November 2012 (2012-11-27) * [0001, 0022-0024]; claim 2; figures 1-6 * ----- | 13,14 | |

The present search report has been drawn up for all claims

| Place of search | Date of completion of the search | Examiner |
|---|---|---|
| The Hague | 6 July 2022 | Steinbock, Lorenz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**Application Number**

**EP 21 20 9118**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

**1. claims: 1-12**

**Electronic tag and method to determine by a microprocessor behaviour of an animal from movement data**
---

**2. claims: 13, 14**

**An ear tag wherein the electronic tag is positioned centrally with respect to the pin**
---

**EP 4 183 250 A1**

## ANNEX TO THE EUROPEAN SEARCH REPORT
## ON EUROPEAN PATENT APPLICATION NO.

EP 21 20 9118

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2022

| Patent document cited in search report | | Publication date | Patent family member(s) | | Publication date |
|---|---|---|---|---|---|
| CN 112970616 | A | 18-06-2021 | CN | 112970615 A | 18-06-2021 |
| | | | CN | 112970616 A | 18-06-2021 |
| CA 2494670 | A1 | 24-09-1999 | NONE | | |
| US 10045511 | B1 | 14-08-2018 | NONE | | |
| US 2021307291 | A1 | 07-10-2021 | AU | 2016266101 A1 | 22-12-2016 |
| | | | AU | 2018220079 A1 | 13-09-2018 |
| | | | AU | 2018260961 A1 | 29-11-2018 |
| | | | BR | 132016029466 E2 | 24-07-2018 |
| | | | CA | 3007296 A1 | 08-06-2017 |
| | | | US | 2017156288 A1 | 08-06-2017 |
| | | | US | 2021307291 A1 | 07-10-2021 |
| | | | WO | 2017096256 A1 | 08-06-2017 |
| EP 3320772 | A1 | 16-05-2018 | EP | 3320772 A1 | 16-05-2018 |
| | | | US | 2018132456 A1 | 17-05-2018 |
| CN 108617533 | B | 12-03-2021 | NONE | | |
| US 2017208778 | A1 | 27-07-2017 | AU | 2015207713 A1 | 01-09-2016 |
| | | | CA | 2936717 A1 | 23-07-2015 |
| | | | EP | 3094173 A1 | 23-11-2016 |
| | | | US | 2014123912 A1 | 08-05-2014 |
| | | | US | 2017208778 A1 | 27-07-2017 |
| | | | WO | 2015107521 A1 | 23-07-2015 |
| CN 111264412 | A | 12-06-2020 | NONE | | |
| WO 2017210740 | A1 | 14-12-2017 | AU | 2017276810 A1 | 24-01-2019 |
| | | | BR | 112018075539 A2 | 09-04-2019 |
| | | | CA | 3026605 A1 | 14-12-2017 |
| | | | CN | 109640640 A | 16-04-2019 |
| | | | EP | 3468354 A1 | 17-04-2019 |
| | | | US | 2019141959 A1 | 16-05-2019 |
| | | | WO | 2017210740 A1 | 14-12-2017 |
| WO 2019132803 | A2 | 04-07-2019 | NONE | | |
| WO 2016183616 | A1 | 24-11-2016 | NONE | | |
| KR 101204277 | B1 | 27-11-2012 | NONE | | |

EPO FORM P0459

For more details about this annex : see Official Journal of the European Patent Office, No. 12/82

18